# EUROPEAN PATENT APPLICATION

(11) **EP 3 333 761 A1**
(43) Date of publication of application: **13.06.2018**
(21) Application number: 17162533.8
(22) Date of filing: 23.03.2017
(51) Int. Cl.: G06K 9/00

(54) **METHOD OF ANALYSIS OF VISUALISED DATA**

(30) Priority: 09.12.2016 PL 41975916
(71) Applicant: Free Construction Sp. z o.o., 00-140 Warszawa (PL)
(72) Inventor: Piolun-Noyszewski, Marcin, 01-923 Warszawa (PL); Weiss, Marcin, 00-683 Warszawa (PL); Sapala, Kamil, 00-464 Warszawa (PL)
(74) Representative: Godlewski, Piotr

(57) **Abstract**

The object of the invention is a method of analysis of visualised data, comprising the steps of: data reception, statistical processing of data, generation of a pattern representing the processed results of analyses, further comprising detection of pattern features by means of a neural network, and grouping of result visualisations.

## Description

The object of the invention is a method of analysis of visualised data, in particular the one using the TensorFlow library.

In the prior art, methods of analysis of data and methods of analysis of patterns by means of devices are known. US 5060278 patent discloses a pattern recognition apparatus comprising:
- pattern input means for inputting pattern data and set of learning data,
- a neural network system including neural networks, wherein each of said neural networks receives said pattern data from said pattern input means, to each of said neural networks, a corresponding one or more of a plurality of identification classes is assigned and has only two output units. Learning of the neural networks is performed by using learning data belonging to all identified classes.

US 6317517 patent discloses a method of performing statistical pattern recognition in a set of data having predetermined dimensions involving the steps of performing feature selection on the set of data to determine a selected feature. Performing pattern recognition uses the set of data with the selected feature to determine a recognised pattern and output the recognised pattern.

In the prior art, products allowing for analysis of numerical data (statistical packages, e.g. SPSS, R, STATA) and for pattern recognition (TensorFlow - programming library made available by Google, used in machine learning, for, among others, pattern recognition) are known. However, there is not any solution for automation of the process of detecting similarities of results of data analyses when the measured variables have incomparable scales, especially when the intensity of the phenomenon occurrence does not change in time, but the scale changes or the variable values are in a different unit (e.g. centimetre, metre, kilometre) and/or have a different order of magnitude. Bringing them to comparability requires, depending on the case, to perform various mathematical operations (e.g. multiplying by an appropriate value) or statistical operations (normalisation/standardisation etc.). The selection of an adequate method of conversion is made by a man who understands the data. Only data prepared in this manner can be treated with algorithms used to search for similarities in numerical values.

Comparing the similarities of objects/events/groups/output statistics by using the currently used technological solutions and analytical methods assumes that they have the same scale. If it is not so, conversions (selected by man) appropriate for a particular case are made. However, in the prior art, there is not any automatic mechanism for discovering similarities without the need to bring the variables to a comparable scale. Therefore, the invention being the object of the application responds to a niche in the technical field of presented solutions and solves a new technical problem.

The object of the invention is a method of analysis of visualised data, comprising the steps of:
- data reception,
- statistical processing of data,
- generation of a pattern representing the processed results of analyses,
characterised in that it further involves:
- detection of pattern features using a neural network, and
- grouping of result visualisations.

Preferably, pattern generation in the method consists in visualising in the form of graphs. Preferably, the graphs belong to the groups of: linear graphs, bar graphs, scatter-plots, box-plots, heat diagrams, and the detection of pattern features consists in the analysis of graphs. Preferably, the graphs are converted to a pattern form.

It is also preferable if the neural network is a convolutional network. Preferably, during detection of pattern features, the learned schemes are transferred between similar problems and the learned neural network is used for patterns of various resolutions.

Preferably, the neural network is based on a graphics engine.

Preferably, the method according to the invention is characterised in that classification of a result to a particular group determines sending a signal to an external system. Preferably, the external system, as a result of the received signal, allows to block the user accessing to a particular informatic system. It is also preferable if the external system, as a result of the received signal, allows to block the user opening of a particular lock. It is still preferable when the external system, as a result of the received signal, allows execution of a particular security policy (set of rules) in the external system. A typical approach to pattern recognition, known in the prior art, consists in dividing RGB component values of a pattern into three arrays, comparing each array with a reference which will result in an array of differences. This approach is susceptible to colour changes or translations of the searched object. To combat this susceptibility, a method of convolutional neural networks was developed which was modelled on the operation of the visual cortex and used, among others, by TensorFlow.

In short, the method consists in searching for small fragments of the target pattern and in assessing the analysed pattern, taking into account, among others, number of found components, their mutual position and rotation. Thanks to this, the system based on convolutional neural networks, even though it does not "understand" in a human way what is, for example, the presented graph, it is able to find, on a given pattern, components of the graph, and thereby find the searched values (even significantly deviating from other graphs and data representations included in the learning set). This flexibility allows using convolutional neural networks when analysing graphical data representations regardless of resolution or scale of the compared graphs.

According to the invention, the results of data analyses are, for better understanding and easier interpretation, visualised in the form of various graphs (linear graphs, bar graphs, pie charts, scatter-plots, box-plots, heat diagrams etc.). It may be useful not only to transfer the results onto the graphs but also to analyse the graphs themselves, thanks to which similarities imperceptible in numerical values can be detected. The proposed solution consists in replacing decisions made by man, regarding the way to bring the variables having various scales to comparability with a fully automatic mechanism. It consists in automatic generation of a graph by a program module and in conversion thereof to a pattern form (e.g. a bitmap), and then in directing them as input signals to multiplied graphics engines, such as e.g. TensorFlow (based on a particular type of neural networks) in order to group similar patterns which are visualizations of the result of statistical analyses performed.

The object of the invention is presented in embodiments in the drawing, in which:
Fig. 1 - a block diagram of the method of analysis of visualised data;
Fig. 2- an embodiment of the invention.

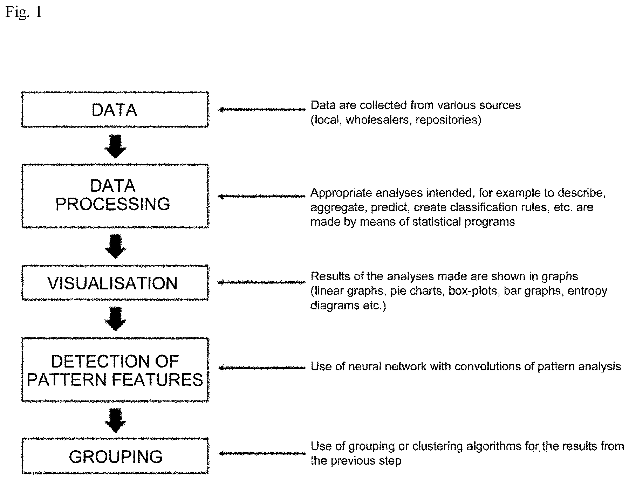

Fig. 1 shows schematic steps included in the method of analysis of visualised data.

The first step of the method according to the invention consists in the reception of data collected in various data sources (often independent of each other), wherein these can be both local and external databases. Then, the data are processed and analyses are made by means of statistical programs. Aggregation, description, grouping, classification or prediction is performed, depending on the research problem. Results of the analyses performed are then visualised by means of a graph adequate for the particular case. It can be a bar graph, a pie chart, a heat diagram, a scatter-plot, a box-plot or other presenting results of the analyses. At this point, the analytical process according to the currently used technology and methods is ended, while the developed solution assumes that the generated patterns will now be processed by the neural network. By using the TensorFlow framework and convoluted neural networks, the patterns will be used to teach the networks how to recognise new components or, based on them, the neural network will generate vectors describing the patterns. Then, the vectors will be used in clustering or grouping algorithms for learning or clustering, or classification.

In the accompanying scheme, a feature which distinguishes this method of analysis from the currently used solutions is clearly visible - visualizations which are usually the last step in the analytical process are input data for the proper analysis.

Below, embodiments will be presented which are only an illustration of the method according to the invention and are non-limiting.

### Example 1

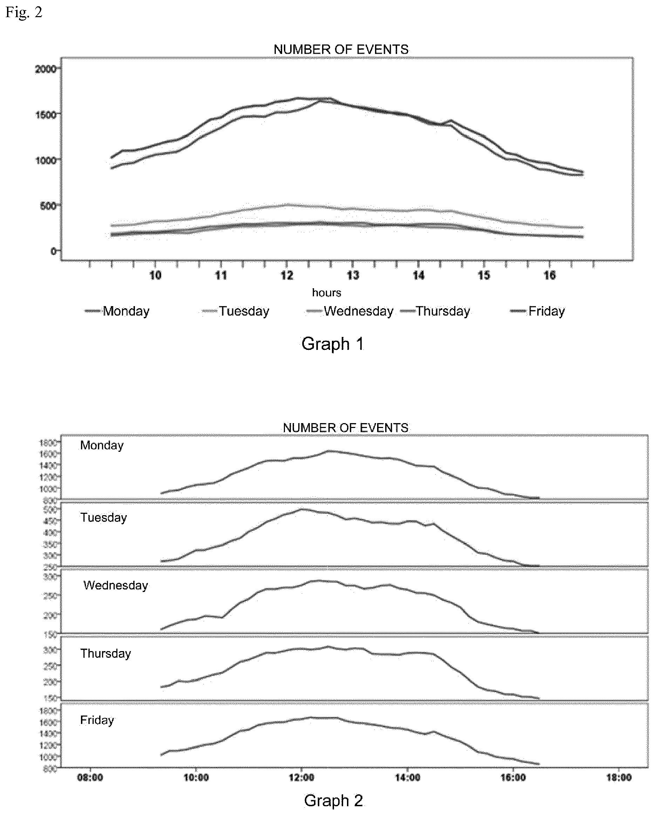

An embodiment of the invention is shown in Fig. 2 in which there are two graphs. They represent number of inquiries from employees of a certain company to the database containing personal data of clients. The data come from an author's system of teleinformatic security, processing consists, in this particular case, in aggregation - adding up a number of events in 10-minute (optimal time interval in which the data should be aggregated was determined in advance) time interval. This results in a time series and its visualisation is a line graph. If the original numerical values were analysed (Fig. 1, Graph 1), it could be noticed that the described phenomenon is similar (the measured variable adopts similar values) on Mondays and Fridays, and on Wednesdays and Thursdays. However, if automatically scalable graphs (Fig. 2, Graph 2) were considered as the object of analysis, which is assumed by the developed invention, it could be noticed that value of the variable under consideration increases, is maintained at a constant level and decreases at the same times on all days of the week. Only the order of magnitude varies. The considered variable is characterised by repeatability, decreases and increases of the value take place in a fixed cycle, which could not be detected in a manner not controlled by man, using currently known solutions. However, by considering visualisations as the object of analysis, similarities which are imperceptible in numerical values can be found.

### Example 2

The external system of teleinformatic security monitors collective events occurring in companies, and also individual behaviours of users - specific employees using digital documents.

For example, number and content of created and edited various documents (text documents, spreadsheets, etc.) are subject to control. For example, in a given unit of time (e.g. day, week), proportions indicating how many documents which match (for example, based on words contained therein) various departments of the company (accounting, marketing, legal department, etc.) were used by a specific person are visualised in grouped bar graphs. If an employee starts to edit documents which he did not edit previously or he edited rarely, proportions on the next visualisation significantly change and patterns will be grouped differently. By using the method according to the invention, information on occurrence of an abnormal behaviour will be sent to the external system, access to specific resources will be automatically blocked for this person, and notification on possible abuse requiring checking/possible restoration of authorisations will be also automatically generated for the person responsible for security in the company.

### Example 3

A special case of use of the method according to the invention can be centralised systems controlling the access to rooms or buildings, having a digital, hierarchical system for managing the authorisations. People having access accounts in the system have a delegated catalogue of access authorisations, most often consisting in granting authorisations to open selected locks by means of an electronic key, an access code or reading of biometric parameters. Differentiation of authorisations depending on the time and day of the week is also used, e.g. access is allowed exclusively during weekdays and during working hours. The authorisation catalogue is stored in the central system controlling the authorisations of the access control system and is operated by a delegated operator.

The essence of the external security system is the ability to omit the need for the operator's service in case of immediate necessity of cutting off the access to protected resources in a room or building. As a result of the analysis carried out according to the method according to the invention, the system can modify the authorisation catalogue in real time, directly in the central authorisation catalogue of the access control system and without having to involve its operator, which allows saving time and considerably reducing possible losses caused by abuse of authorisations.

### Example 4

The result of the analysis carried out by the external security system can also be to undertake instantaneous, automatic actions in cooperation with other systems having appropriate remote control channels.

Current models of business process management foresee their representation in the form of processes and procedures translating directly into electronic systems for management of resources: data, facilities and objects. An important element of all processes is protection against actions of unauthorized persons and bystanders, including limiting the level of access to the absolute minimum for people authorised to access a part of the resources.

An integral element of such systems is security policies aimed at preparing the procedure in case of loss of or exceeding the granted authorisations by unauthorized persons or gaining access to resources by outsiders. In such a case, a security policy (set of rules) is activated which aims at, in the first place, protecting the resources but also often analysing the losses, etc. - depending on the specific solution adopted. However, the common part of all security policies is the need to make a decision and to activate it, which is often done manually by an appointed employee but almost always requires taking a series of decisions by many people.

The external security system allows automatic activation of the security policy of the external system or systems and execution of the set of rules which is foreseen therein in a situation where such a needs arises based on result of the analysis. Direct exchange of information by electronic means allows immediate activation of the procedure initiating execution of the security policy without having to involve a man and with omission of a series of decisions.

## Claims

1. A method of analysis of visualised data, comprising the steps of:
- data reception,
- statistical processing of data,
- generation of a pattern representing the processed results of analyses,
**characterised in that** it further comprises:
- detection of pattern features by means of a neural network, and
- grouping of result visualisations.

2. The method according to claim 1, **characterised in that** generation of a pattern consists in visualisation in the form of graphs.

3. The method according to claim 2, **characterised in that** the graphs belong to the groups of: linear graphs, bar graphs, scatter-plots, box-plots, heat diagrams.

4. The method according to claim 1, **characterised in that** detection of pattern features consists in the analysis of graphs.

5. The method according to claim 2 or 3 or 4, **characterised in that** the graphs are converted to a pattern form.

6. The method according to claim 1, **characterised in that** the neural network is a convolutional network.

7. The method according to claim 6, **characterised in that** during detection of pattern features, the learned schemes are transferred between similar problems and the learned neural network is used for patterns of various resolutions.

8. The method according to claim 1, **characterised in that** the neural network is based on a graphics engine.

9. The method according to claim 1, **characterised in that** classification of a result to a particular group determines sending a signal to an external system.

10. The method according to claim 9, **characterised in that** the external system, as a result of the received signal, allows to block the user accessing to a particular informatic system.

11. The method according to claim 9, **characterised in that** the external system, as a result of the received signal, allows to block the user opening of a particular lock.

12. The method according to claim 9, **characterised in that** the external system, as a result of the received signal, allows execution of a particular security policy (set of rules) in the external system.
